# EUROPEAN PATENT APPLICATION

(11) **EP 2 908 027 A1**
(43) Date of publication of application: **19.08.2015**
(21) Application number: 13844722.2
(22) Date of filing: 11.10.2013
(51) Int. Cl.: F16H 25/24, F16H 25/20, H02K 7/06

(54) **ELECTRIC LINEAR ACTUATOR**

(30) Priority: 12.10.2012 JP 2012227499
(71) Applicant: NTN Corporation, Osaka-shi, Osaka 550-0003 (JP)
(72) Inventor: IKEDA, Yoshinori, Iwata-shi Shizuoka 438-8510 (JP); KAZUNO, Keisuke, Iwata-shi Shizuoka 438-8510 (JP); FUNADA, Kensuke, Iwata-shi Shizuoka 438-8510 (JP); TATEISHI, Kouji, Iwata-shi Shizuoka 438-8510 (JP)
(74) Representative: Cohausz & Florack
(86) International application number: PCT/JP2013/077740
(87) International publication number: WO 2014/058049

(57) **Abstract**

An object of the present invention is to provide an an electric linear actuator provided with the anti-rotation mechanism for the screw shaft which is able to achieve a simple structure and thus low manufacturing cost and to reduce the sliding friction and wear of the housing. According to the present invention, there is provided an electric linear actuator comprising a housing formed of aluminum alloy; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally, characterized in that a sleeve for an anti-rotation of the screw shaft is fitted into a blind bore of the housing so that flat portions formed on an outer circumference of the sleeve engage flat surfaces formed on an inner circumference of the blind bore of the housing to prevent rotation of the sleeve relative to the housing.

## Description

### Field of the Invention

The present invention relates to an electric linear actuator provided with a ball screw mechanism used in motors in general industries and driving sections of automobiles etc., and more particularly to an electric linear actuator used in a transmission or a parking brake of automobiles for converting rotary motion from an electric motor to linear motion of a driving shaft via a ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly size of electric motor and power consumption are increased. Thus, the ball screw mechanisms have been widely adopted as more efficient actuators.

In an electric linear actuator of the prior art, an output member connected to a nut can be axially displaced by rotationally driving a ball screw shaft forming a ball screw with use of an electric motor supported on a housing. In usual, since friction of the ball screw mechanism is very low, the ball screw shaft tends to be reversely rotated easily when a pushing thrust load is applied to the output member, and accordingly it is necessary to hold the position of the output member when the electric motor is stopped.

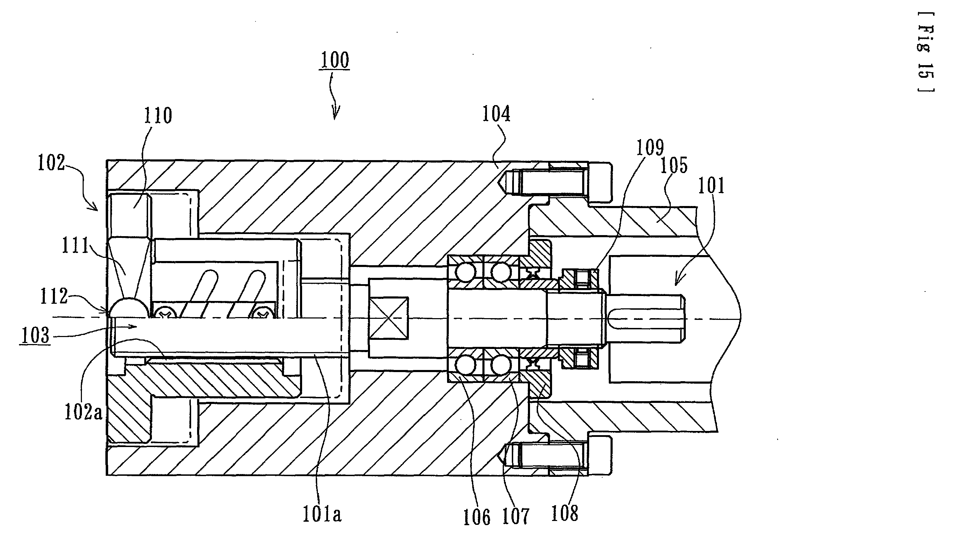

Accordingly, it has been developed an electric linear actuator in which a brake means for an electric motor is arranged or a low efficient means such as a worm gear is provided as a power transmitting means. In Fig. 15, one representative example of them is shown. This electric linear actuator 100 adopts a ball screw mechanism 103 comprising a ball screw shaft 101 rotationally driven by an electric motor (not shown) and a ball screw nut 102 threadably engaged with the ball screw shaft 101 via balls (not shown). A rotation of a motor shaft (not shown) of the electric motor causes a rotation of the ball screw shaft 101 connected to the motor shaft and further causes a linear motion (motion in left-right directions in Fig. 15) of the ball screw nut 102.

The ball screw shaft 101 is rotationally supported on cylindrical housings 104,105 via two rolling bearings 106,107. These bearings 106,107 are secured in position by a locking member 109 via a securing lid 108 for preventing looseness of the bearings 106, 107.

A helical screw groove 101a is formed on the outer circumference of the ball screw shaft 101 with which the ball screw nut 102 is threadably engaged via balls. A helical screw groove 102a corresponding to the helical screw groove 101a of the ball screw shaft 101 is formed on the inner circumference of the ball screw nut 102 and a large diameter portion 110 is also formed on one end of the nut 102.

A flat portion 111 is formed on the side of the large diameter portion 110 by cutting it out to have a flat end face. A cam follower 112 (anti-rotation means for the ball screw nut 102) using a rolling bearing is projected radially outward from a substantially central portion of the flat portion 111. The cam follower 112 is engaged with a cut-out portion (not shown) formed on the housing 104.

As described above, since the cam follower 112 is fitted in the cut-out portion, accompanying rotation of the ball screw nut 102 to the rotation of the ball screw shaft 101 can be prevented and since the cam follower 112 rotationally slides on the cut-out portion, problems of sliding friction as well as wear can be reduced (see e.g. Patent Document No. 1 below).

### Document of the Prior Art

### Patent Document

Patent Document 1: JP 2007 -333046 A

### Disclosure of the Invention

### Problems to be solved by the Invention

In the electric linear actuator 100 of the prior art, since it adopts the cam follower 112 as the anti-rotation means for the ball screw nut 102, it is possible to reduce problems of sliding friction as well as wear and thus to reduce operating torque of the electric linear actuator 100. However, since the cam follower itself uses the rolling bearing, the manufacturing cost would be increased and any anti-wear measures would be required when the housing 104 is formed of aluminum.

It is, therefore, an object of the present invention to provide an electric linear actuator provided with the anti-rotation mechanism for the screw shaft which is able to achieve a simple structure and thus low manufacturing cost and to reduce the sliding friction and wear of the housing.

### Means for solving the Problems

For achieving the object of the present invention, there is provided according to the present invention of claim 1, an electric linear actuator comprising a housing formed of aluminum alloy; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally, characterized in that a sleeve for an anti-rotation of the screw shaft is fitted into a blind bore of the housing so that flat portions formed on an outer circumference of the sleeve engage flat surfaces formed on an inner circumference of the blind bore of the housing to prevent rotation of the sleeve relative to the housing.

According to the present invention of claim 1, since it comprises a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft and is characterized in that a sleeve for an anti-rotation of the screw shaft is fitted into a blind bore of the housing so that flat portions formed on an outer circumference of the sleeve engage flat surfaces formed on an inner circumference of the blind bore of the housing to prevent rotation of the sleeve relative to the housing, it is possible to obtain the anti-rotation mechanism for the screw shaft of the electric linear actuator with simple structure and low manufacturing cost as well as to reduce wear of the housing of the electric linear actuator.

It is preferable as defined in claim 2 that the recessed grooves and the flat portions of the sleeve are formed respectively as one pair circumferentially opposite positions each other and the paired recessed grooves and the flat portions of the sleeve are positioned at circumferentially different phase positions each other. This makes it possible to keep the strength and rigidity of the sleeve.

It is preferable as defined in claim 3 that a small protruded ridge is formed on each flat portion of the sleeve and adapted to be press-fitted onto the flat surfaces of the blind bore. This makes it possible to prevent rotation of the sleeve relative to the housing without any play.

It is also preferable as defined in claim 4 that a plurality of small protruded ridges are formed on the flat portions of the sleeve. This makes it possible to optimize the press-fitting ability and allowable amount of play at the press-fitted portion due to wear with time.

According to the present invention of claim 5, there is provided an electric linear actuator comprising a housing formed of aluminum alloy; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally, characterized in that a sleeve for an anti-rotation of the screw shaft is fitted into the blind bore of the housing so that projected portions each having a semicircular cross-section and formed on an outer circumference of the sleeve engage recessed grooves each having a circular-arc cross-section and formed on an inner circumference of the blind bore of the housing to prevent rotation of the sleeve relative to the housing.

According to the present invention of claim 5, since it comprises a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally, and is characterized in that a sleeve for an anti-rotation of the screw shaft is fitted into the blind bore of the housing so that projected portions each having a semicircular cross-section and formed on an outer circumference of the sleeve engage recessed grooves each having a circular-arc cross-section and formed on an inner circumference of the blind bore of the housing to prevent rotation of the sleeve relative to the housing, it is possible to obtain the anti-rotation mechanism for the screw shaft of the electric linear actuator with simple structure and low manufacturing cost as well as to reduce wear of the housing of the electric linear actuator.

It is also preferable as defined in claim 6 that the radius of curvature of the recessed groove of the blind bore of the housing is smaller than that of the projected portion of the sleeve. This makes it possible to prevent rotation of the sleeve relative to the housing without any play.

It is preferable as defined in claim 7 that the blind bore of the housing is formed with a guiding portion having a cone configuration concentrated toward the recessed portion. This makes it possible to smoothly and precisely press-fit the sleeve into the blind bore of the housing and thus to improve the assembling operability without preparing special assembling devices such as positioning jigs.

It is preferable as defined in claim 8 that the blind bore of the housing is formed with an annular groove into which a stopper ring is snap-fitted, and that the peripheral edge of the stopper ring is tapered. This makes it possible to firmly secure the sleeve without axial play due to pressure applied by the stopper ring against the end face of the sleeve.

Finally, it is preferable as defined in claim 9 that the sleeve is formed by cold rolling method and the flat surfaces of the blind bore is formed by aluminum die casting method. This enables to improve mass-productivity and thus to reduce manufacturing cost.

### Effects of the Invention

According to the electric linear actuator of the present invention, since it comprises a housing formed of aluminum alloy; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally, and is characterized in that a sleeve for an anti-rotation of the screw shaft is fitted into a blind bore of the housing so that flat portions formed on an outer circumference of the sleeve engage flat surfaces formed on an inner circumference of the blind bore of the housing to prevent rotation of the sleeve relative to the housing, it is possible to obtain the anti-rotation mechanism for the screw shaft of the electric linear actuator with simple structure and low manufacturing cost as well as to reduce wear of the housing of the electric linear actuator.

Further according to the electric linear actuator of the present invention, since it comprises a housing formed of aluminum alloy; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally, and is characterized in that a sleeve for an anti-rotation of the screw shaft is fitted into the blind bore of the housing so that projected portions each having a semicircular cross-section and formed on an outer circumference of the sleeve engage recessed grooves each having a circular-arc cross-section and formed on an inner circumference of the blind bore of the housing to prevent rotation of the sleeve relative to the housing, it is possible to obtain the anti-rotation mechanism for the screw shaft of the electric linear actuator with simple structure and low manufacturing cost as well as to reduce wear of the housing of the electric linear actuator.

### Brief description of the Drawings

[Fig. 1] A longitudinal section view showing a first embodiment of an electric linear actuator of the present invention;
[Fig. 2] A longitudinal section view showing an actuator main body of Fig. 1;
[Fig. 3] An enlarged cross-sectional view showing an intermediate gear portion of Fig. 1;
[Fig. 4] An enlarged cross-sectional view showing a modification of the intermediate gear portion of Fig. 3;
[Fig. 5] A front elevation view showing a second housing of the electric linear actuator of Figure 1;
[Fig. 6(a)] A front elevation view showing the sleeve of Fig. 5;
[Fig. 6(b)] A side elevation view of the sleeve of Fig. 6(a);
[Fig. 6(c)] A perspective view showing a modification of the sleeve of Figs. 6(a);
[Fig. 7] A longitudinal section view showing the second housing of Fig. 1;
[Fig. 8] A perspective view showing the second housing of Fig. 1;
[Fig. 9] A longitudinal section view showing a second embodiment of an electric linear actuator of the present invention;
[Fig. 10 (a)] A front elevation view showing a sleeve of Fig. 9;
[Fig. 10(b)] A longitudinal section view taken along a line X-X of Fig. 10(a);
[Fig.11] A cross-section view taken along a line XI-XI of Fig. 9;
[Fig. 12(a)] A front elevation view showing a modification of the sleeve of Fig. 10;
[Fig. 12(b)] A cross-section view taken along a line XII-XII of Fig.12(a);
[Fig. 12(c)] A rear elevation view of the sleeve of Fig. 12(a);
[Fig. 13(a)] A front elevation view showing a bottom plate of the sleeve of Fig. 12;
[Fig. 13(b)] A cross-section view taken along a line XIII-XIII of Fig. 13(a);
[Fig. 13(c)] A rear elevation view of the bottom plate of the sleeve of Fig. 13(a);
[Fig. 14(a)] A front elevation view showing another modification of the sleeve of Fig. 10;
[Fig. 14(b)] A side elevation view of the sleeve of Fig. 14(a); and
[Fig. 15] A longitudinal section view showing an electric linear actuator of the prior art.

### Mode for carrying out the Invention

One mode for carrying out the present invention is an electric linear actuator comprising a housing; an electric motor mounted on the housing; a speed reduction mechanism for reducing rotational speed of the electric motor via a motor shaft; a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft characterized in that a sleeve formed on its inner circumference with axially extending recessed grooves is fitted in the blind bore of the housing; that a pin mounted on one end of the screw shaft is engaged with the recessed grooves; and that flat portions formed on an outer circumference of the sleeve engage flat surfaces formed on an inner circumference of the blind bore of the housing to prevent rotation of the sleeve relative to the housing.

### First Embodiment

Preferred embodiments and modifications of the present invention will be hereinafter described with reference to the drawings.

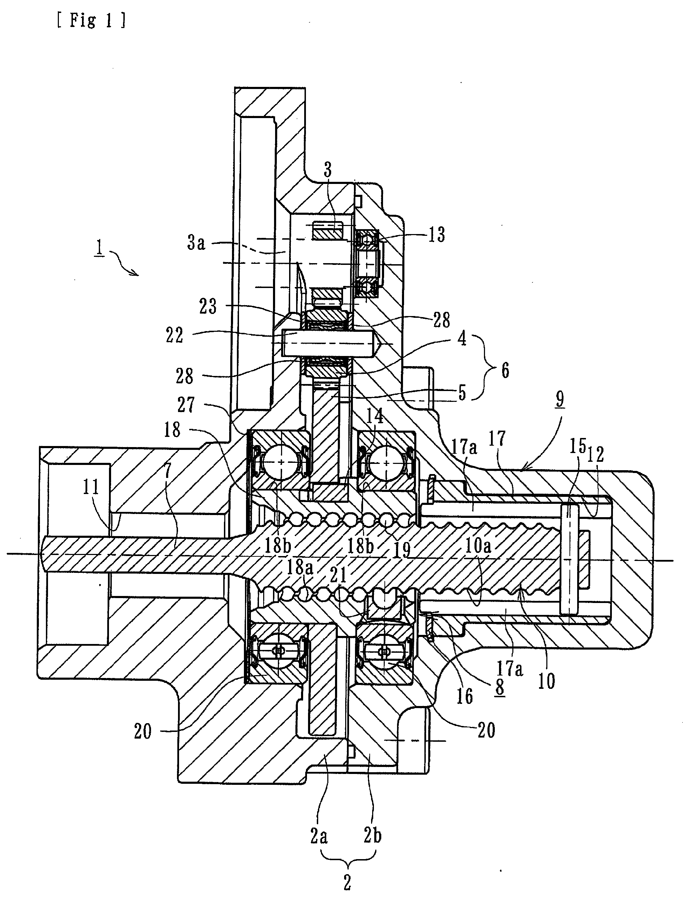

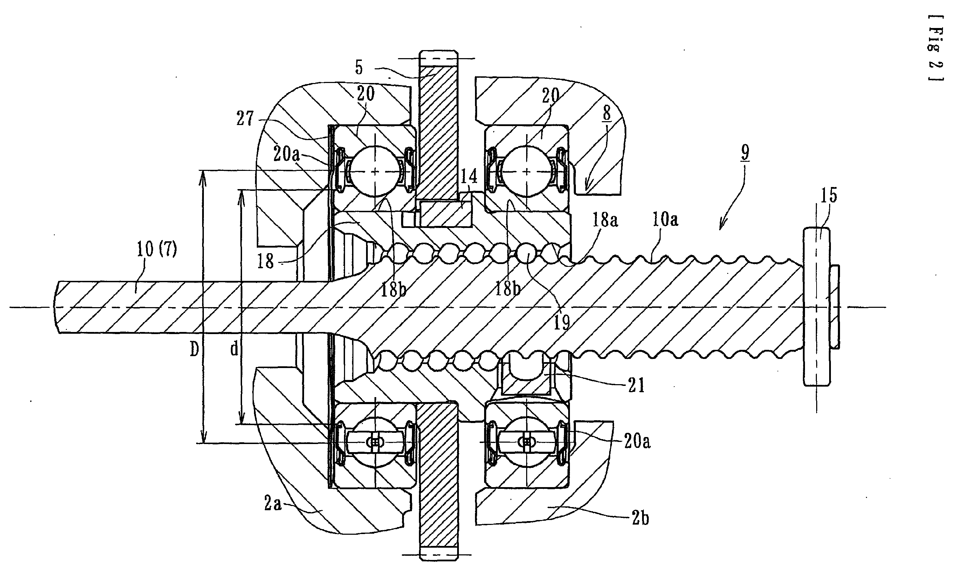

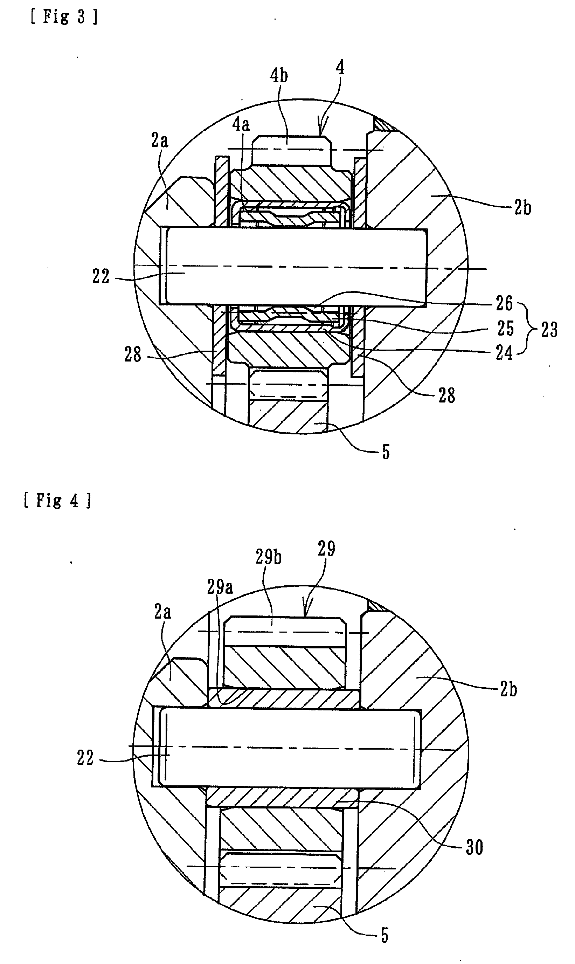

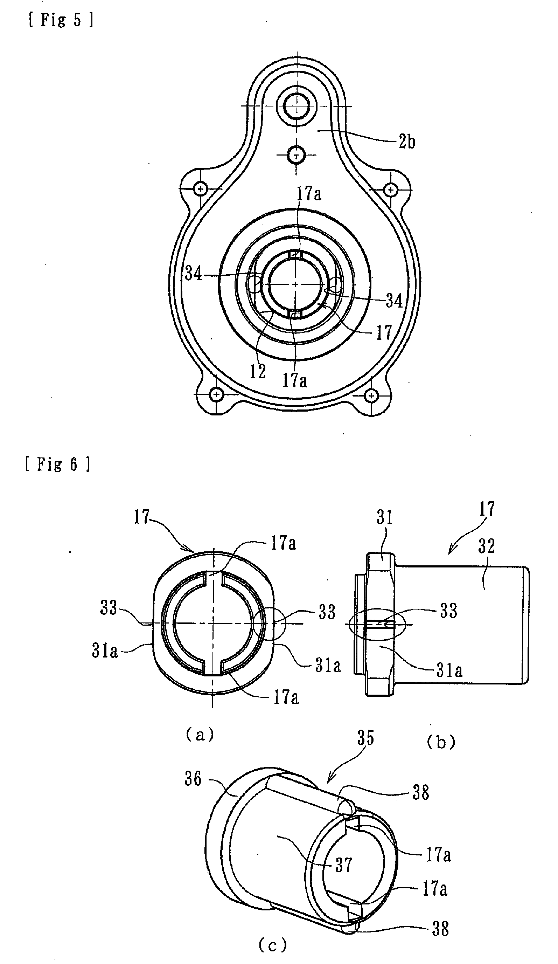

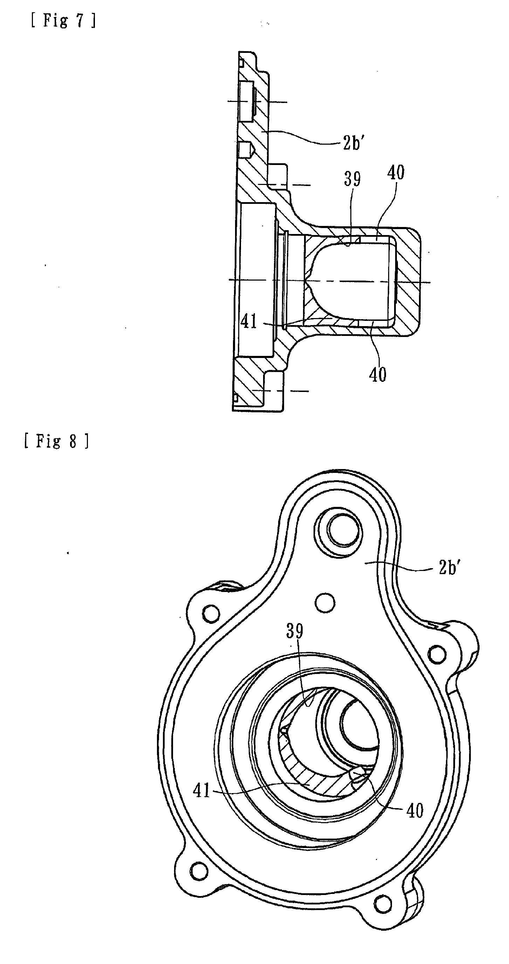

Fig. 1 is a longitudinal section view showing a first embodiment of an electric linear actuator of the present invention, Fig. 2 is a longitudinal section view showing an actuator main body of Fig. 1, Fig. 3 is an enlarged cross-sectional view showing an intermediate gear portion of Fig. 1, Fig. 4 is an enlarged cross-sectional view showing a modification of the intermediate gear portion of Fig. 3, Fig. 5 is a front elevation view showing a second housing of the electric linear actuator of Figure 1, Fig. 6(a) is a front elevation view showing the sleeve of Fig. 5, Fig. 6(b) is a side elevation view of the sleeve of Fig. 6(a), Fig. 6(c) is a perspective view showing a modification of the sleeve of Figs. 6(a), Fig. 7 is a longitudinal section view showing the second housing of Fig. 1, and Fig. 8 is a perspective view showing the second housing of Fig. 1.

As shown in Fig. 1, an electric linear actuator 1 comprises a cylindrical housing 2, an electric motor (not shown) mounted on the housing 2, an intermediate gear 4 mating with an input gear 3 mounted on the motor shaft 3a of the motor, a speed reduction mechanism 6 including an output gear 5 mating with the intermediate gear 4, a ball screw mechanism 8 for converting rotational motion of the electric motor transmitted via the speed reduction mechanism 6 to axial linear motion of a driving shaft 7, and an actuator main body 9 including the ball screw mechanism 8.

The housing 2 is formed of aluminum alloy such as A 6063 TE, ADC 12 etc. and comprises a first housing 2a and a second housing 2b abutted with and integrally fastened each other by fastening bolts (not shown). The electric motor is mounted on the first housing 2a and blind bores 11,12 for containing a screw shaft 10 are formed in the first and second housings 2a, 2b respectively.

The input gear 3 is press-fitted onto the motor shaft 3a of the electric motor immovably each other and rotationally supported by a deep groove rolling bearing 13 mounted on the second housing 2b. The output gear 5 mating with the intermediate spur gear 4 is integrally secured via a key 14 on a nut 18 forming the ball screw mechanism 8 described later more in detail.

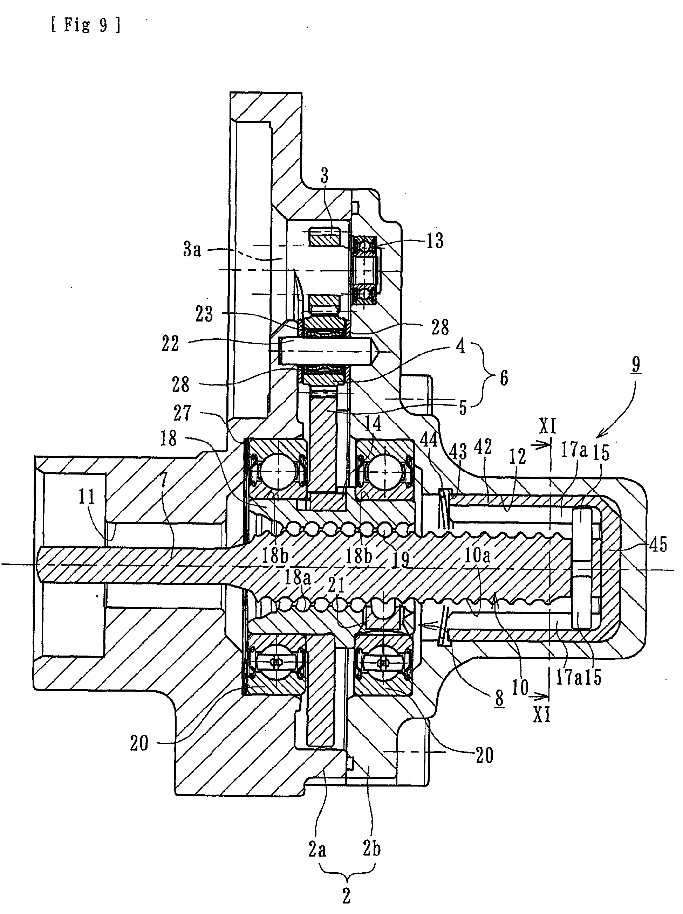

The driving shaft 7 is formed integrally with the screw shaft 10 forming the ball screw mechanism 8 and a guide pin 15 is mounted on one end (the right end in Fig. 1) of the driving shaft 7. In addition, a sleeve 17 described later more in detail is fitted in the blind bore 12 of the second housing 2b. The sleeve 17 is axially secured by a stopper ring 16 snapped in an annular groove (e.g. annular groove 43 in Fig. 9). The guide pin 15 of the screw shaft 10 is engaged in axially extending recessed grooves 17a, 17a formed on the inner circumference of the sleeve 17 so that the screw shaft 10 can be axially moved but not rotated relative to the sleeve 17 (thus, relative to the housing 2b).

The guide pin 15 is formed of high carbon chrome bearing steel such as SUJ 2 or blister bearing steel such as SCr 435 and its surface is formed of a carbonitriding layer including carbon of 0.80 % by weight or more and having hardness of HRC 58 or more. In this case it is possible to adopt needle rollers used in needle bearings as the guide pins. This makes it possible to have the guide pin having hardness of HRC 58 or more and being excellent in anti-wear property, availability and manufacturing cost.

According to the present embodiment, the tip or peripheral edge of the stopper ring 16 is tapered. This makes it possible to firmly secure the sleeve without axial play since the sleeve 17 can be urged toward the right (Fig. 1) by pressure applied by the stopper ring 16 against the end face of the sleeve 17.

As shown in the enlarged view of Fig. 2, the ball screw mechanism 8 comprises the screw shaft 10 and the nut 18 mated with the screw shaft 10 via balls 19. The screw shaft 10 is formed on its outer circumference with a helical screw groove 10a. On the other hand, the nut 18 is formed on its inner circumference with screw groove 18a corresponding to the screw groove 10a of the screw shaft 10 and a plurality of balls 19 are rollably contained between the screw grooves 10a, 18a. The nut 18 is supported by two supporting bearings 20, 20 rotationally but axially immovably relative to the housings 2a, 2b. A numeral 21 denotes a bridge member for achieving an endless circulating passage of balls 19 through the screw groove 18a of the nut 18.

The cross-sectional configuration of each screw groove 10a, 18a may be either one of circular-arc or Gothic-arc configuration. However, this embodiment adopts the Gothic-arc configuration since it can have a large contacting angle with the ball 19 and a small axial gap. This enables to have large rigidity against the axial load and thus to suppress generation of vibration.

The nut 18 is formed of case hardened steel such as SCM 415 or SCM 420 and its surface is hardened to HRC 55 to 62 by vacuum carburizing hardening. This enables to omit treatments such as buffing for scale removal after heat treatment and thus to reduce the manufacturing cost. On the other hand, the screw shaft 10 is formed of medium carbon steel such as S 55C or case hardened steel such as SCM 415 or SCM 420 and its surface is hardened to HRC 55 to 62 by induction hardening or carburizing hardening.

The output gear 5 forming part of the speed reduction mechanism 6 is firmly secured on the outer circumference 18b of the nut 18 and the support bearing 20, 20 are press-fitted onto the nut 18 via a predetermined interface at both sides of the output gear 5. This enables to prevent both the supporting bearings 20, 20 and the output gear 5 from being axially shifted although strong thrust load would be applied to them from the driving shaft 7. Each supporting bearing 20 comprises the deep groove ball bearing on both sides of which is mounted shield plates 20a, 20a for preventing lubricating grease sealed within the bearing body from being leaked outside and abrasives from being entered into the bearing body from outside.

In the illustrated embodiment, since both the supporting bearings 20, 20 are formed by deep groove ball bearing having same specifications, it is possible to support both a thrust load applied from the driving shaft 7 and a radial load applied from the output gear 5 and also to simplify confirmation work to prevent error in assembly of the bearing and thus to improve the assembling operability. In this case, the term "same specifications" means that bearings have same inner diameters, outer diameters, width dimensions, rolling element sizes, rolling element numbers and internal clearances.

In the illustrated embodiment, one of the paired supporting bearings 20, 20 is mounted on the first housing 2a via a ring shaped elastic washer 27. The washer 27 is a wave-washer press-formed of austenitic stainless steel sheet (e.g. SUS 304 family of JIS) or preservative cold rolled steel sheet (e.g. SPCC family of JIS). An inner diameter "D" of the wave washer 27 is formed larger than an outer diameter "d" of the inner ring of the supporting bearing 20. This makes it possible to eliminate axial play of the paired bearings 20, 20 and thus to obtain smooth rotation of them. In addition, since the washer 27 contacts only the outer ring of the bearing 20 and does not contact its rotational inner ring, it is possible to prevent the inner ring of the bearing 20 from being abutted against the housing 2a and thus locked by the housing 2a although the nut 18 would be urged by a reverse thrust load toward the housing 2a.

As shown in Fig. 3, the intermediate gear 4 is rotationally supported by a gear shaft 22 mounted on the first and second housings 2a, 2b via a rolling bearing 23. When one end of the gear shaft 22 is press-fitted into an aperture of the first housing 2a, if it is designed that the other end of the gear shaft 22 is mounted in an aperture of the second housing 2b by the clearance fit, assembling misalignment will be allowed and thus smooth rotational performance of the rolling bearing 23 and thus the intermediate gear 4 will be obtained. In the illustrated embodiment, the rolling bearing 23 is a so-called "shell type" needle roller bearing comprising an outer ring 24 press-formed of steel sheet press-fitted into an inner circumference 4a of the intermediate gear 4 and a plurality of needle rollers 26 contained in the outer ring 24 via a cage 25. This needle bearing is easily available and thus reduces the manufacturing cost.

Ring shaped washers 28, 28 are installed on both sides of the intermediate gear 4 to prevent direct contact of the intermediate gear 4 against the first and second housings 2a, 2b. In this case, a face width of teeth 4b of the intermediate gear 4 is formed smaller than an axial width of gear (blank). This enables to reduce the contact area between the intermediate gear 4 and the washers 28 and thus their frictional resistance and to obtain smooth rotational performance. The washers 28 are flat washers press-formed of austenitic stainless steel sheet having high strength and frictional resistance or preservative cold rolled steel sheet. Alternatively, the washers 28 may be formed of brass, sintered metal or thermoplastic synthetic resin such as PA (polyamide) 66 etc. in which a predetermined amount of fiber reinforcing material such as GF (glass fiber) etc. is impregnated.

In addition, the width of the rolling bearing 23 is set smaller than the width of the intermediate gear 4. This makes it possible to prevent wear or deformation of sides of the bearing and thus to obtain smooth rotation.

Fig. 4 shows a modification of the structure of Fig. 3. The intermediate gear 29 is rotationally supported on the gear shaft 22 mounted on the first and second housings 2a, 2b via a sliding bearing 30. In this embodiment, the face width of the teeth 29b is formed same as the axial width of gear 29. The sliding bearing 30 is structured as an oil impregnated bearing (e.g. "BEARFIGHT" (registered trade mark of NTN corporation)) comprising porous metal including graphite micro-powder having a larger width than that of the intermediate gear 29 and press-fitted into the inner circumference 29a of the intermediate gear 29. This makes it possible to prevent the intermediate gear 29 from being contacted with the first and second housings 2a, 2b and worn without mounting any washer, to achieve smooth rotational performance with suppressing frictional resistance during rotation of the intermediate gear 29, and to reduce the manufacturing cost with suppressing increase of the number of components. The sliding bearing 30 may be formed of thermoplastic polyimide resin enabling injection molding.

As shown in Fig. 5, the sleeve 17 for supporting the screw shaft 10 not rotationally but axially movably is fitted in the blind bore 12 of the second housing 2b. The sleeve 17 is formed of medium carbon steel such as S 55C or case hardened steel such as SCM 415 or SCM 420 by cold rolling method and its surface is hardened to HRC 55 to 62 by induction hardening or carburizing hardening. This enables to improve mass-productivity and thus to reduce manufacturing cost. As shown in Figs. 6(a) and 6(b), the sleeve 17 comprises a large diameter portion 31 on its one end and a cylindrical portion 32 axially extending from the large diameter portion 31. The large diameter portion 31 is formed with diametrically opposed flat portions 31a and an axially extending small protruded ridge 33 is formed on each flat portion 31a substantially at the center thereof.

On the other hand, the blind bore 12 of the second housing 2b to which the sleeve 17 is fitted is formed with flat surfaces 34, 34 corresponding to the flat portions 31a of the sleeve 17 by aluminum die casting method contributing to improvement of mass-productivity and reduction of manufacturing cost. The flat portions 31a of the sleeve 17 are press-fitted into the flat surfaces 34 by small pressure to prevent rotation of the sleeve 17 relative to the housing 2b without any play therebetween (see Fig. 5). Although oppositely arranged paired flat portions 31a and paired flat surfaces 34 of the second housing 2b are illustrated, it is basically possible to prevent the rotation of the sleeve 17 relative to the housing 2b by using single flat portion and single flat surface.

As shown in Fig. 6(a), the recessed grooves 17a and the flat portions 31a of the sleeve 17 are arranged at positions circumferentially 90° apart from each other in order to assure the strength and rigidity of the sleeve 17. In addition, the number of protruded ridge 33 may be increased to 2 or 3 to optimize the press-fitting ability and allowable amount of play at the press-fitted portion due to wear with time.

A modified sleeve 35 of the sleeve 17 is shown in Fig. 6(c). The sleeve 35 is formed of medium carbon steel such as S 55C or case hardened steel such as SCM 415 or SCM 420 by cold rolling method. The sleeve 35 comprises a large diameter portion 36 on its one end and a cylindrical portion 37 axially extending from the large diameter portion 36. The inner circumference of the sleeve 35 is formed with axially extending recessed grooves 17a, 17a at diametrically opposite positions and the outer circumference of the sleeve 35 is formed with projected portions 38, 38 each having a semicircular cross-section and semispherical end at positions where the recessed grooves 17a, 17a are formed.

As shown in Figs. 7 and 8, a blind bore 39 of the housing 2b' into which the sleeve 35 is fitted is formed with recessed grooves 40, 40 each having a circular-arc cross-section with which the projected portions 38, 38 are engaged. The radius of curvature of each recessed groove 40 of the blind bore 39 of the housing 2b' is smaller than that of each projected portion 38 of the sleeve 35. This makes it possible to prevent rotation of the sleeve 35 relative to the housing 2b' without any play.

Further according to the present embodiment, the blind bore 39 of the second housing 2b' is formed with a guiding portion 41 (shown by hatchings in Fig. 8) having a cone configuration concentrated toward the recessed portion 40. This makes it possible to smoothly and precisely press-fit the sleeve 35 into the blind bore 39 of the housing 2b' and thus to improve the assembling operability without preparing special assembling devices such as positioning jigs.

### Second Embodiment

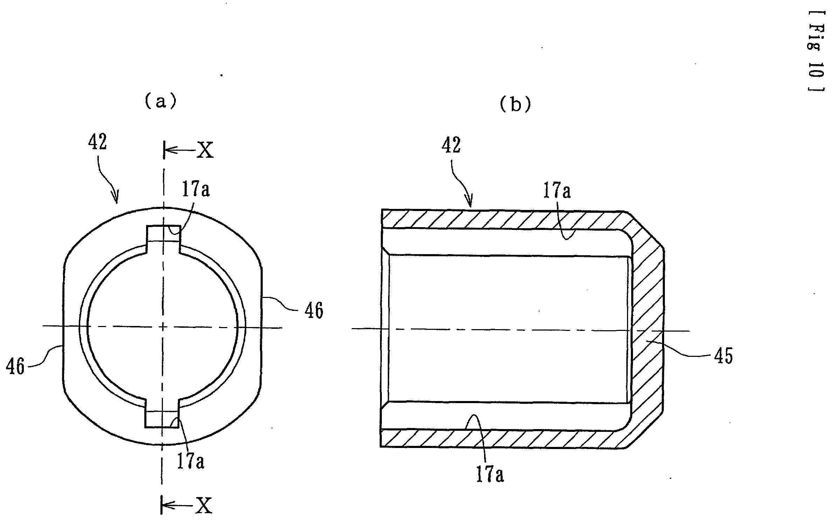

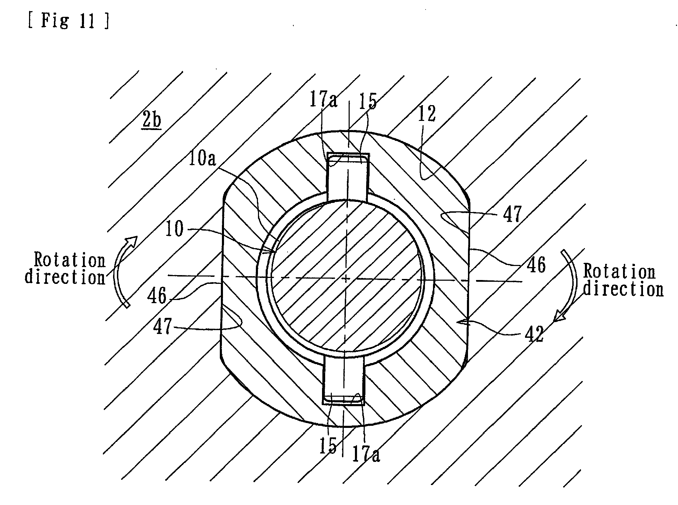

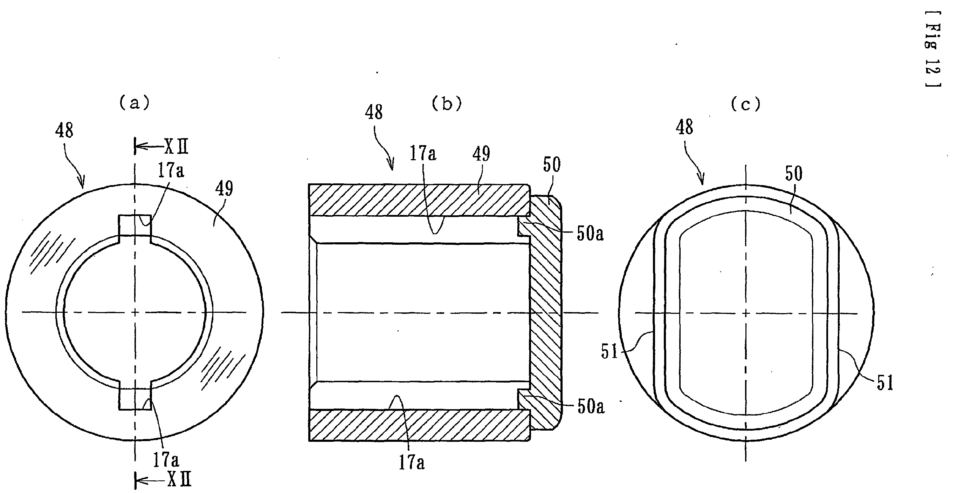

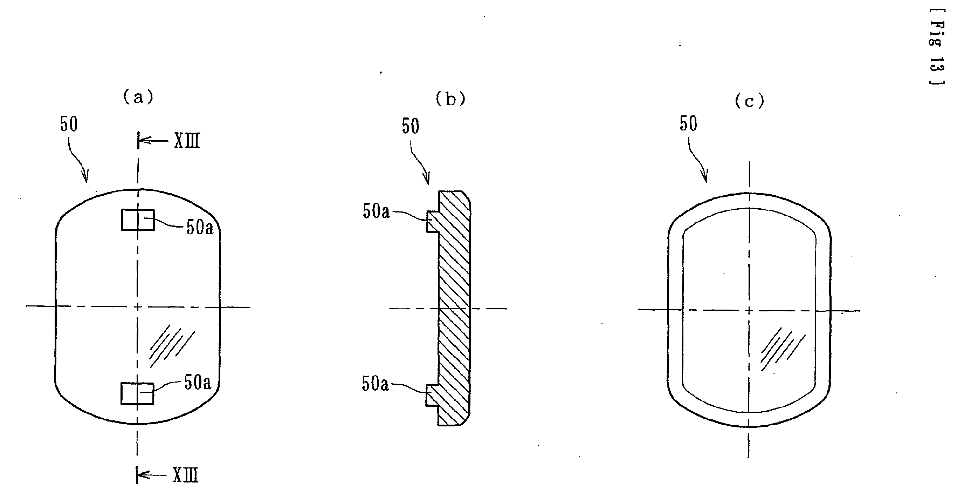

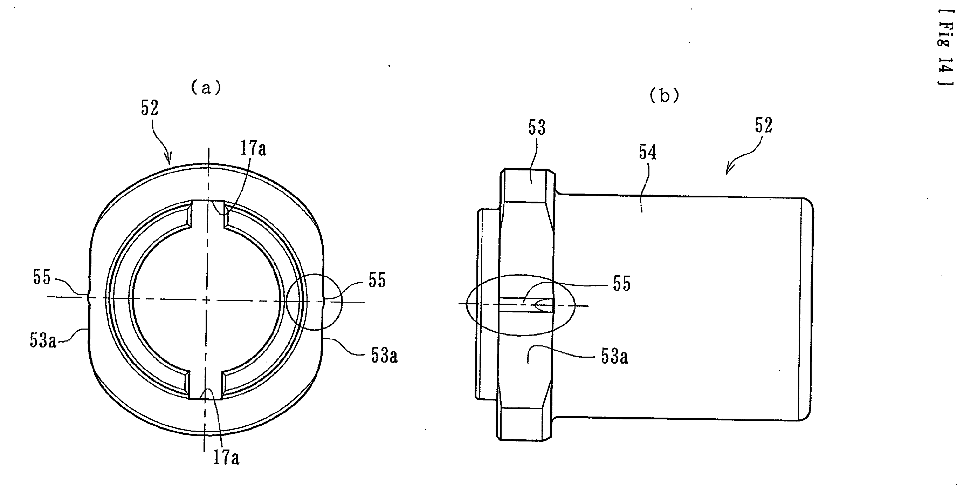

Fig. 9 is a longitudinal section view showing a second embodiment of an electric linear actuator of the present invention, Fig. 10(a) is a front elevation view showing a sleeve of Fig. 9, Fig. 10(b) is a longitudinal section view taken along a line X-X of Fig. 10(a), Fig. 11 is a cross-section view taken along a line XI-XI of Fig. 9, Fig.12(a) is a front elevation view showing a modification of the sleeve of Fig. 10, Fig. 12(b) is a cross-section view taken along a line XII-XII of Fig. 12(a), Fig. 12(c) is a rear elevation view of the sleeve of Fig.12(a), Fig. 13(a) is a front elevation view showing a bottom plate of the sleeve of Fig. 12, Fig. 13(b) is a cross-section view taken along a line XIII-XIII of Fig.13(a), Fig. 13(c) is a rear elevation view of the bottom plate of the sleeve of Fig. 13(a), Fig. 14(a) is a front elevation view showing another modification of the sleeve of Fig. 10, and Fig. 14(b) is a side elevation view of the sleeve of Fig.14(a). This second embodiment is basically different from the first embodiment only in the structure of the sleeve and therefore same structural elements as those of the first embodiment will be denoted with using same reference numerals as those used in the first embodiment and detailed description of them will be omitted.

As shown in Fig. 9, the electric linear actuator of this embodiment comprises a cylindrical housing 2, an electric motor (not shown) mounted on the housing 2, an intermediate gear 4 mating with an input gear 3 mounted on the motor shaft 3a of the motor, a speed reduction mechanism 6 including an output gear 5 mating with the intermediate gear 4, a ball screw mechanism 8 for converting rotational motion of the electric motor transmitted via the speed reduction mechanism 6 to axial linear motion of a driving shaft 7, and an actuator main body 9 including the ball screw mechanism 8.

The driving shaft 7 is formed integrally with the screw shaft 10 forming the ball screw mechanism 8 and a guide pin 15 is mounted on one end of the driving shaft 7. In addition, a sleeve 42 described later more in detail is fitted in the blind bore 12 of the second housing 2b. The guide pins 15, 15 of the screw shaft 10 are engaged in axially extending recessed grooves 17a, 17a formed on the inner circumference of the sleeve 42 so that the screw shaft 10 can be axially moved but not rotated relative to the sleeve 42.

In this embodiment, an annular groove 43 is formed on the opening of the blind bore 12 of the second housing 2b and falling-out of the sleeve 42 from the blind bore 12 prevented by a stopper ring 44 snap-fitted in the annular groove 43. It is preferable to use as the stopper ring 44 a wave washer press-formed of cold rolled steel sheet so that it urges the end face of the sleeve 42 to prevent generation of axial play of the sleeve 42.

The sleeve 42 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted condition and finally formed to the sleeve by a so-called MIM (Metal Injection Molding) method. The MIM method can easily mold sintered alloy material to article having desirable accurate configurations and dimensions although the article require high manufacturing technology and have configurations hard to form.

One example of the metallic powder is shown such as SCM 415 which can be carburization quenched later and has compositions of C: 0.13 % by weight, Ni: 0.21% by weight, Cr: 1.1 % by weight, Cu: 0.04 % by weight, Mn: 0.76 % by weight, Mo: 0.19 % by weight, Si: 0.20 % by weight, and remainder: Fe. The sleeve 42 is formed by controlling temperature of carburization quenching and tempering. There can be used other materials for the sleeve 42 e.g. FEN 8 of Japanese Powder Metallurgy Industry Standard which is excellent in formability and rust resistance and includes Ni: 3.0 to 10.0 % by weight or precipitation hardening stainless steel SUS 630 including C: 0.07 % by weight, Cr: 17 % by weight, Ni: 4 % by weight, Cu: 4 % by weight, and remainder: Fe. The surface hardness of SUS 630 can be increased within a range of HRC 20 to 33 by solution treatment to obtain both high toughness and hardness.

As shown in Fig. 10, the sleeve 42 has a cup-shaped configuration and comprises a bottom portion 45 fitted into the blind bore 12 until it closely contact the bottom of the blind bore 12 and axially extending recessed grooves 17a, 17a engaged with the guide pins are formed by cutting on the inner circumference of the sleeve 42 at diametrically opposite positions. Flat surfaces 46, 46 are formed on the outer circumference of the sleeve 42 and arranged at positions circumferentially 90° apart from the recessed grooves 17a, 17a to assure the strength and rigidity of the sleeve 42.

As shown in Fig. 11, the blind bore 12 of the second housing 2b is formed with flat surfaces 47, 47 corresponding to the flat portions 46, 46 of the sleeve 42. Engagement of the flat surfaces 47, 47 and the flat portions 46, 46 can prevent rotation of the sleeve 42 relative to the housing 2b. This makes it possible to simplify the configuration of the sleeve 42 and reduce its weight and manufacturing steps and costs as well as to provide an electric linear actuator which can reduce damage and wear of the second housing 2b and has excellent durability, strength and reliability. Although it is described that paired flat portions of the sleeve 42 and paired flat surfaces of the housing 2b are formed, only one flat portion and flat surface may be formed respectively on the sleeve 42 and housing 2b. Falling-out of the sleeve 42 from the blind bore 12 is prevented by the stopper ring 42 (see Fig. 9).

Fig. 12 shows a modified sleeve 48 of the previously described sleeve 42 (Fig. 10) which is formed as having a cup-shaped configuration and comprises a cylindrical sleeve main body 49 and a bottom plate 50 fitted into one end of the sleeve main body 49. The sleeve 48 is fitted into the blind bore 12 of the second housing 2b until the bottom plate 50 is closely contacted with a bottom of the blind bore 12 of the housing 2b. Flat portions 51, 51 are formed on the outer circumference of the sleeve main body 49 at diametrically opposed positions and substantially orthogonal positions relative to the recessed grooves 17a, 17a. This eliminates thinned wall portion of the sleeve 48 and thus it is possible to assure the strength of the sleeve 48. The two-piece structure of the sleeve 48 can simplify the structure of the sleeve 48 and improve its mass-productivity. Similarly to the previously described sleeve 42, this sleeve 48 is prevented from being axially fallen-out from the blind bore 12 by the stopper ring 44. Also in this case, since the contact surface between the sleeve 48 and the stopper ring 44 is circular, it is possible to maintain uniform urging force applied to the sleeve 48 by the stopper ring 44 and thus to stably hold the sleeve 48 without any axial play.

As shown in Fig. 13, the bottom plate 50 of the sleeve 48 has an outline corresponding to the configuration of the sleeve main body 49 and a pair of projections 50a, 50a are integrally formed on a side mounted to the end face of the sleeve main body 49. The bottom plate 50 can be mounted on the sleeve main body 49 with fitting the projections 50a, 50a in the recessed grooves 17a, 17a.

Figs. 14(a) and 14(b) show another modified sleeve 52 of the previously described sleeve 42 (Fig. 10) having a large diameter portion 53 and a cylindrical portion 54 axially extending from the large diameter portion 53. A pair of diametrically opposed flat portions 53a, 53a are formed on the larger diameter portion 53 and axially extending small protruded ridges 55 are also formed on the flat portions 53a, 53a substantially at the center thereof. As clearly shown in Fig. 14(a), the recessed grooves 17a, 17a are arranged at positions 90° apart from the flat portions 53a, 53a to keep the strength and rigidity of the sleeve 52. In addition, the number of protruded ridge 55 may be increased to 2 or 3 to optimize the press-fitting ability and allowable amount of play at the press-fitted portion due to wear with time.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The electric linear actuator of the present invention can be applied to electric linear actuators used in an electric motor for general industries and driving sections of an automobile etc. having ball screw mechanism for converting the rotational input from an electric motor to the linear motion of a driving shaft.

### Explanation of Reference numerals

- 1: electric linear actuator
- 2: housing
- 2a: first housing
- 2b, 2b': second housing
- 3: input gear
- 3a: motor shaft
- 4, 29: intermediate gear
- 4a, 29a: inner circumference of intermediate gear
- 4b, 29b: teeth
- 5: output gear
- 6: speed reduction mechanism
- 7: driving shaft
- 8: ball screw mechanism
- 9: actuator main body
- 10: screw shaft
- 10a, 18a: screw groove
- 11, 12, 39: blind bore
- 13, 23: rolling bearing
- 14: key
- 15: guide pin
- 16, 44: stopper ring
- 17, 35, 42, 48, 52: sleeve
- 17a: recessed groove
- 18: nut
- 18b: outer circumference of nut
- 19: ball
- 20: supporting bearing
- 20a: shield plate
- 21: bridge member
- 22: gear shaft
- 24: outer ring
- 25: cage
- 26: needle roller
- 27, 28: washer
- 30: sliding bearing
- 31, 36: large diameter portion
- 31a: flat portions
- 32, 37: cylindrical portion
- 33: protruded ridge
- 34: flat surface
- 38: projection
- 40: recessed portion
- 41: guiding portion
- 43: annular groove
- 45: bottom portion
- 46, 51, 53a: flat portion
- 47: flat surface
- 49: sleeve main body
- 50: bottom plate
- 50a: projection
- 53: large diameter portion
- 54: cylindrical portion
- 55: protruded ridge
- 100: electric linear actuator
- 101: ball screw shaft
- 101a, 102a: screw groove
- 102: ball screw nut
- 103: ball screw mechanism
- 104, 105: housing
- 106, 107: rolling bearing
- 108: securing lid
- 109: locking member
- 110: large diameter portion
- 111: flat portion
- 112: cam follower
- D: inner diameter of washer
- d: outer diameter of inner ring of supporting bearing

## Claims

1. An electric linear actuator comprising:
a housing (2) formed of aluminum alloy;
an electric motor mounted on the housing (2);
a speed reduction mechanism (6) for reducing rotational speed of the electric motor via a motor shaft (3a); and
a ball screw mechanism (8) for converting rotational motion of the electric motor transmitted via the speed reduction mechanism (6) to axial linear motion of a driving shaft (7); the ball screw mechanism (8) comprising a nut (18) formed with a helical screw groove (18a) on its inner circumference and supported by bearings (20, 20) mounted on the housing (2) rotationally but axially immovably, and a screw shaft (10) coaxially integrated with the driving shaft (7), formed with helical screw groove (10a) on its outer circumference corresponding to the helical screw groove (18a) of the nut (18), inserted into the nut (18) via a large number of balls (19), and supported on the housing (2) axially movably but not rotationally, **characterized in:**
**that** a sleeve (17) for an anti-rotation of the screw shaft (10) is fitted into a blind bore (12) of the housing (2) so that flat portions (31a) formed on an outer circumference of the sleeve (17) engage flat surfaces (34) formed on an inner circumference of the blind bore (12) of the housing (2b) to prevent rotation of the sleeve (17) relative to the housing (2b).

2. An electric linear actuator of claim 1 wherein the recessed grooves (17a) and the flat portions (31a) of the sleeve (17) are formed respectively as one pair circumferentially opposite positions each other and the paired recessed grooves (17a) and the flat portions (31a) of the sleeve (17) are positioned at circumferentially different phase positions each other.

3. An electric linear actuator of claim 1 or 2 wherein a small protruded ridge (33) is formed on each flat portion (31a) of the sleeve (17) and adapted to be press-fitted onto the flat surfaces (34) of the blind bore (12).

4. An electric linear actuator of claim 3 wherein a plurality of small protruded ridges (33) are formed on the flat portions (31a) of the sleeve (17).

5. An electric linear actuator comprising:
a housing (2b') formed of aluminum alloy;
an electric motor mounted on the housing (2b');
a speed reduction mechanism (6) for reducing rotational speed of the electric motor via a motor shaft (3a); and
a ball screw mechanism (8) for converting rotational motion of the electric motor transmitted via the speed reduction mechanism (6) to axial linear motion of a driving shaft (7); the ball screw mechanism (8) comprising a nut (18) formed with a helical screw groove (18a) on its inner circumference and supported by bearings (20, 20) mounted on the housing (2b') rotationally but axially immovably, and a screw shaft (10) coaxially integrated with the driving shaft (7), formed with helical screw groove (10a) on its outer circumference corresponding to the helical screw groove (18a) of the nut (18), inserted into the nut (18) via a large number of balls (19), and supported on the housing (2b') axially movably but not rotationally, **characterized in:**
**that** a sleeve (35) for an anti-rotation of the screw shaft (10) is fitted into the blind bore (39) of the housing (2b') so that projected portions (38) each having a semicircular cross-section and formed on an outer circumference of the sleeve (35) engage recessed grooves (40) each having a circular-arc cross-section and formed on an inner circumference of the blind bore (39) of the housing (2b') to prevent rotation of the sleeve (35) relative to the housing (2b').

6. An electric linear actuator of claim 5 wherein the radius of curvature of the recessed groove (40) of the blind bore (39) of the housing (2b') is smaller than that of the projected portion (38) of the sleeve (35).

7. An electric linear actuator of claim 5 wherein the blind bore (39) of the housing (2b') is formed with a guiding portion (41) having a cone configuration concentrated toward the recessed portion (40).

8. An electric linear actuator of claim 1 or 5 wherein the blind bore (39) of the housing (2b') is formed with an annular groove (43) into which a stopper ring (44) is snap-fitted, and wherein the peripheral edge of the stopper ring (44) is tapered.

9. An electric linear actuator of claim 5 wherein the sleeve (35) is formed by cold rolling method and the flat surfaces of the blind bore (39) is formed by aluminum die casting method.
